# EUROPEAN PATENT SPECIFICATION

(11) **EP 4 049 737 B1**
(45) Date of publication and mention of the grant of the patent: **09.10.2024**
(21) Application number: 22158336.2
(22) Date of filing: 23.02.2022
(51) Int. Cl.: C02F 1/04, C02F 1/08, C02F 101/32, B01D 1/06, B01D 3/00, B01D 3/10, B01D 17/02, B01D 17/04

(54) **APPARATUS FOR THE CONCENTRATION OF WASTEWATER**
VORRICHTUNG ZUR ABWASSERKONZENTRATION
APPAREIL POUR LA CONCENTRATION D'EAUX USÉES

(30) Priority: 26.02.2021 IT 202100004514
(43) Date of publication of application: 31.08.2022
(73) Proprietor: Naiad Biotech S.r.l., 45100 Rovigo (RO) (IT); Kaeser Compressori Srl, 40138 Bologna (BO) (IT)
(72) Inventor: Micaglio, Giovanni, 40138 Bologna (IT); Merighi, Roberto, 45100 Rovigo (IT)
(74) Representative: Serravalle, Marco

(56) References cited:
- CN-A- 104 046 512
- DE-A1- 10 030 843
- US-A1- 2009 050 467
- US-B2- 7 422 663

## Description

### Field of invention

**.** The invention is directed to an apparatus for the concentration of wastewater containing oily substances by heat recovery at medium temperature. The invention is further directed to a system comprising at least one compressor and the above defined apparatus for the concentration of wastewater.

### Background of the invention

**.** Screw and piston compressors for compressed air (but also other types of machinery such as marine engines) have the problem of producing large quantities of waste liquids in aqueous solution/ suspension that are very polluting and, if disposed, they are classified as special waste. The main pollutants present in these wastewaters are oily substances, for example lubricating oil used in compressors or other machinery. It is therefore necessary to treat this wastewater to separate oily substances from water.

**.** The current common solution on the market, used to separate water from oily substances, is the use of coalescence filters, which however present several problems (soiling, reliability, degressive filtration, concentration limit, need for periodic maintenance, replacement costs, etc.).

**.** KR2011/0092382 discloses an oil/water separator to separate the oil contained in the condensing water of a compressor. The separator uses an infrared lamp to heat and evaporate water selectively compared to oil. This apparatus, however, has a high energy consumption, since the evaporation of water uses electricity and consequently has a significant operating cost

**.** US 2009/050467 discloses an apparatus to concentrate wastewater wherein wastewater is introduced into the jacket of a beam heat exchanger. Water evaporated is compressed and used in the tubes of the heat exchanger. The apparatus comprises an external tank wherein oil and water separate.

**.** US 7,422,663 discloses a compact array of vertical rising film evaporators in an evacuated multi-effect process for desalination of sea water using waste heat of thermal machines.

. There is therefore a need for a new apparatus for the concentration of wastewater containing oily material that is efficient and presents low running costs.

### Summary of the invention

**.** The invention is directed to an apparatus for the concentration of wastewater containing oily substances, the apparatus comprising: a shell and tube heat exchanger, positioned vertically along the internal perimeter of the apparatus; a tank positioned inside the heat exchanger, wherein wastewater is stocked; an entrance pipe, for the entrance of wastewater, which pipe feeds a mechanic system which allows wastewater to percolate along an internal wall of tank; a pipe that connects the bottom of the tank to suction of a first pump; a pipe connecting the mandate of the first pump to a distribution plate of a heat exchanger; a pipe connecting a bottom of the heat exchanger where concentrated water percolating into the pipes collects, with a suction of a second pump; a pipe connecting a mandate of second pump with the bulk of the tank; an exit pipe connected to a ventilator, preferably centrifuge, that draws vapor into an exit from a head of the heat exchanger; a system for collecting and discharging the condensed vapor; a system that maintains a level in the tank, which system is connected to a collection pipe (502) that leads the withdrawn liquid to a collecting bin or to a disposal system.

**.** The invention is also directed to a process for recovering oil from wastewater of at least one water cooled apparatus, which process comprises: collecting wastewater from the at least one water cooled apparatus; sending the collected wastewater to the above defined apparatus; recovering concentrated oil containing no more than 10% water at the outlet pipe.

**.** The invention is further directed to a system comprising: at least one water cooled apparatus; an apparatus for the concentration of wastewater as above defined; wherein an exit of cooling water of the at least one water cooled apparatus is connected with the entrance of heating water in the heat exchanger of the apparatus for the concentration of wastewater.

### Brief description of the drawings

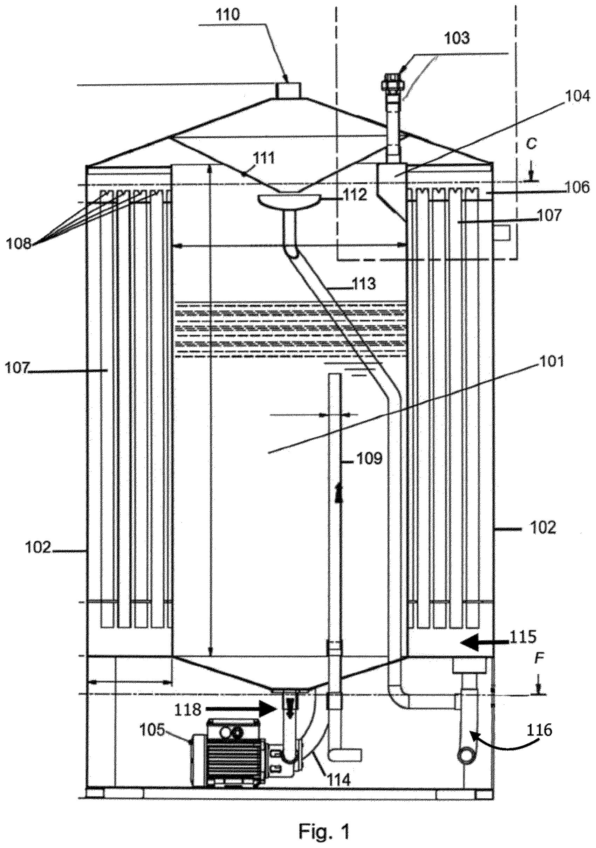

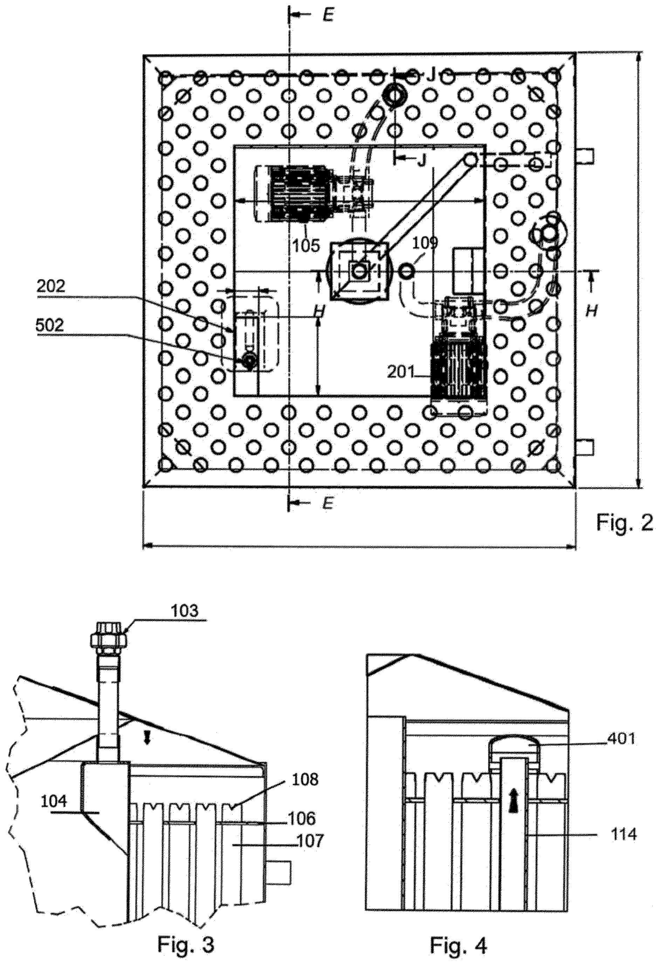

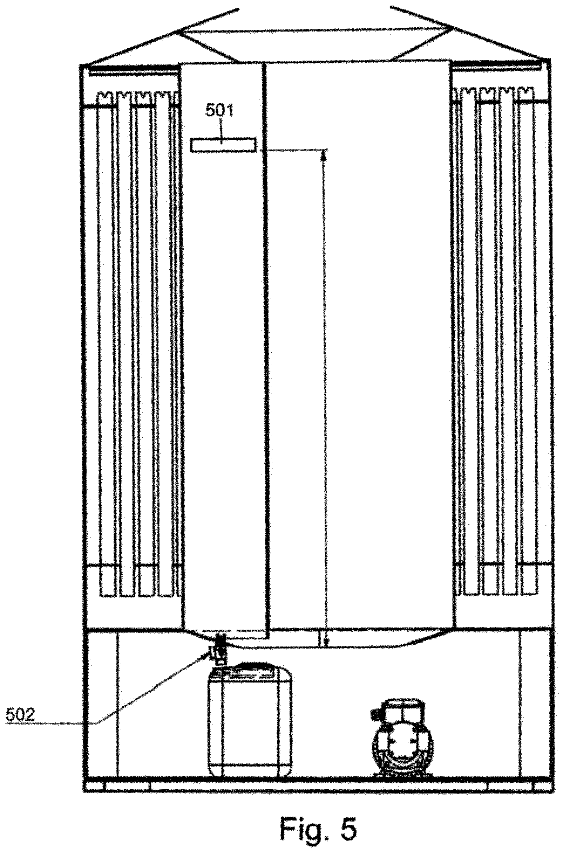

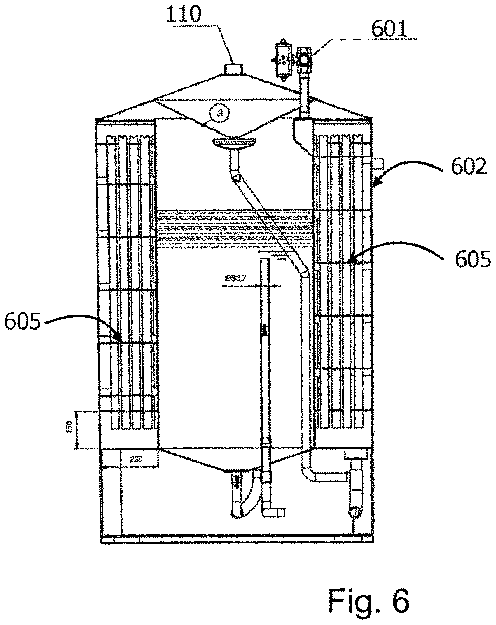

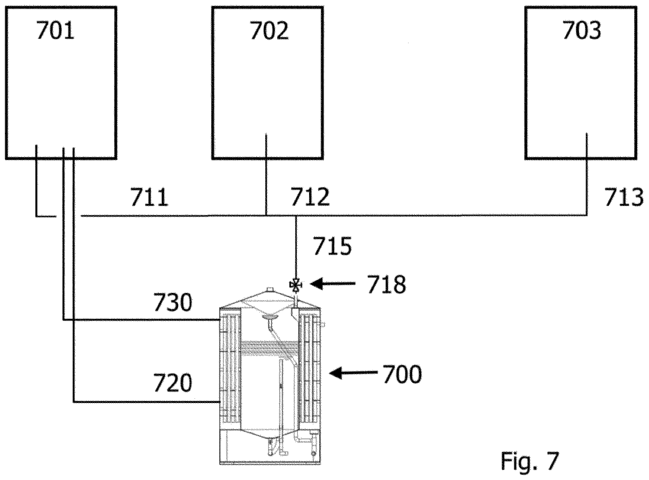

**.** Figure 1 is a side view in section along the H plane of a mode of realization of the invention.
**.** Figure 2 is a top view in section along plane C of the apparatus of Figure 1.
**.** Figure 3 is a detail of Figure 1, in which the upper profile of the heat exchanger tubes is shown.
**.** Figure 4 is a cross-section view along the plane J of the upper right part of the apparatus showing the "cap" device mounted at the outlet of the heat exchanger supply pipe.
**.** Figure 5 is a side view in section along the plane E of the apparatus.
**.** Figure 6 is a view in section of an apparatus according to the invention having circular section.
**.** Fig. 7 is a scheme of the system according to invention comprising three compressors and one apparatus for the concentration of wastewater.

### Detailed description of the invention

**.** The invention is directed to an apparatus for the concentration of water containing oily substances, which apparatus uses the heat recovery of the machinery/apparatus from which the wastewater comes. Wastewater from a compressor has a lubricating oil content ranging from about 1 % by weight to about 5% by weight, depending on the type of compressor and the operating conditions. The apparatus of the present invention allows recovery of highly concentrated oil from wastewater without energy consumption since evaporation of water is performed by recovering heat generated by a water cooled machinery, e.g. a water cooled compressor.

. Figure 1 shows a side view in section of an apparatus 100 according to the invention. Wastewater is sent to the central tank 101, surrounded by the exchanger 102, via the upper inlet tube 103. The inlet flow (which can also be discontinuous) is percolated on the inner wall of the tank by a mechanical system 104. In a preferred embodiment, the mechanical system 104 consists of an expansion chamber to expand the liquid that arrives under pressure, decreases the speed of liquid and prevents that the liquid already present in the tank undergoes perturbations that may compromise the stratification process. In a preferred embodiment, the mechanical system 104 consists of a small compensation tank to slow down the incoming flow, and a slit that allows the liquid to flow along the inner wall of the tank. The size of the slit depends on the flow of wastewater that is fed to the appliance. The higher the flow, the greater the area of the slit section that allows the liquid to reach the central tank. In a preferred embodiment, for an apparatus that receives from about 10 to about 30L/h of wastewater, inlet pipe 103 has preferably a diameter of from 0.75" (19 mm) to 2" (51 mm), and the slit will have a size from 2 to 5 times the diameter of the inlet pipe.

**.** In tank 101, water tends to settle at the bottom of the tank, while oil, having a lower density, tends to separate and form a layer above water. The first pump 105 draws water having a low oil content from the bottom of the tank and sends it to the distribution plate 106 of the heat exchanger 102. In pipes 107 water is partly evaporated and the residual mixture water/oil is collected in reservoir 115frmed in the lower part of the heat exchanger. In this reservoir 115 is preferably present a conductimetric level probe. The second pump 210 is activated and deactivated by the level of the reservoir 115. When the level reaches a set maximum, pump 201 is turned on, and when reaching a set minimum the pomp turned off.

**.** Figure 2 is a top view in section along plane C of the apparatus of Figure 1. The figure shows the first pump 105, the second pump 201, the heat exchanger 202, pipe 109, and collection pipe 502.

**.** Figure 3 is a detail of Figure 1, in which the upper profile of the tubes of the heat exchanger is shown. From this figure it is possible to better see the distribution plate 106 and the tubes 107 protruding from the plate, and the groove 108, preferably V shaped.

**.** Figure 4 is a cross-section view along the plane J of the upper right part of the apparatus. The figure shows the "cap" device 401 mounted at the outlet of the heat exchanger supply pipe 114.

**.** Figure 5 is a side view in section along the plane E of the apparatus. The figures shows the weir 501 and outlet pipe 502, connected to the weir by collection pipe 202 (not shown).

**.** Figure 6 is a side view in section of an apparatus according to the invention, having circular section. A circular section is advantageous because it allows a better flow in the jacket of the heat exchanger, it is easier and cheaper to realize and allows the use of helical flow conveyors. This conveyor allows an optimal heating of all pipes in the heat exchanger and is particularly useful when water temperature is moderate. The helical flow can be derived by the position of sets 605 which are at a different level on the left and on the right of the heat exchanger. Furthermore, in figure 6 it is present an optional feature of the apparatus according to the invention, i.e. a three-way valve 601.

**.** Figure 7 is a scheme of the system according to invention comprising three compressors and one apparatus for the concentration of wastewater. The apparatus 100 receives wastewaters from compressors 701, 702 and 703 through pipes 711, 712 and 713 which joins into pipe 715 on which, before entry into the tank, is present an optional three-way valve 718. The heat exchanger of the apparatus 100 is fed by water exiting compressor 701 and returns to the cooling circuit of compressor 701 through pipe 730.

**.** In the apparatus according to the invention, the central position of the tank allows wastewater to be kept warm, avoiding heat dispersions. The heat exchanger 102 placed around central tank 101 is preferably a thin film shell and tube heat exchanger. A pump 105, fed by a suction pipe 118 placed at the bottom of the central tank 101, sends the cleanest water present at the bottom of tank 101 via pipe 114 to the distribution plate 106 at the head to the shell and tube exchanger 102 vertically mounted.

**.** Preferably, tank 101 comprises a conductimetric level probe and a regulation system connected to it. Since oil has a low conductivity, the probe measures the level of water within central tank 101. If the level is too low, the regulation system stops the first pump 105, avoiding that, by evaporation in the heat exchanger, the amount of water in the tank further decreases. If the level is too high, the regulation system reacts, for example by closing valve 602 shown in figure 6, placed on the pipe 103 that feeds wastewater to the tank 101. This valve avoids the entrance of wastewater to the tank when water level within tank 101 is above a maximum level. The presence of the three-way valve is however optional. Alternatively, in case of a too high level of water in tank 101, it is possible to heat up water coming entering the heat exchanger. In this way, it is possible to increase heat exchange and lower the level of water in the tank.

**.** The level of water in the tank 101 is preferably maintained in a correct range, e.g. between 20% and 80 %, preferably between 30 and 70 % of the maximum level of the tank, e.g. the level defined by the level regulation system e.g. weir 501. If the level is too low, there is the risk that water pumped from first pump 105 contains a too high amount of oil, if the amount is too high, the oil recovered from outlet pipe 502 contains a too high amount of water.

**.In** a preferred embodiment, it is used a "cap" system 401, purposely studied and mounted to the exit of pipe 114 feeding the distribution plate of the heat exchanger, that allows the fluid to spread evenly along the entire upper surface of the plate 106 feeding in the same way every single tube 107.

**.** Tubes 107 protrude from the plate of a height that can vary from about 1 cm to about 5 cm, preferably from about 2 cm to about 3 cm. Thus, during operation, a layer of liquid is formed on plate 106 approximately equal to the height of the hinge of tubes 107 on the plate. Preferably, each individual tube 107 also presents "V" grooves 108 at the top end; these grooves allow the liquid to enter gradually and in a distributed way into the tube, creating a liquid film on the inner surface of the tube. The liquid flows along the inner wall of the tubes allowing the formed vapour to rise upwards. The hot liquid accumulates in the lower part of the exchanger. A second pump 201 sends the concentrated liquid into the central tank through tube 109 to a height where the concentration of oil in the liquid in the tank is similar to the concentration of oil in the liquid in tube 109. In a preferred embodiment, the tube 109 enters the tank at a height between ½ and ¾ of the total height of the liquid in the tank. The functioning of pump 201, in a preferred embodiment, is discontinuous and the pump is activated when the level of liquid in the bottom of the exchanger reaches a predetermined value. This operation is also calibrated so as not to disturb and mix the surface of the liquid. Both (low power) pumps are therefore controlled by a level logic and therefore have a discontinuous operation and absorption over time.

**. In** a preferred embodiment, the heating water enters the jacket of the heat exchanger 102 from the bottom and comes out from the top, thus it has an inverse path compared to the wastewater that enters from the top and descends by gravity downwards. Thus, in a preferred embodiment, the heat exchanger works counter current. To increase efficiency (especially at low temperatures), a series of intermediate septa between inlet and outlet may preferably be fitted, making the water path compulsory and layered to lap and heat all pipes equally. The large heat exchange surface allows the equipment to work well even with recovery water at low temperatures (60-70 °C) that derive, for example, from the return of steam condensation, engine and compressor cooling, process heat recovery, etc..

**.** Water evaporated in tubes 107 is then discharged either as vapour or as condensed liquid. Vapour rises upwards and partly condenses in the dome of the apparatus, whose outside surface is in contact with external air, at ambient temperature. Water condensed in the dome or in exit pipe 110 is collected on surface 111. A fan, preferably centrifugal, on the outlet pipe 110 of the apparatus removes wet steam present in the overhead of the apparatus creating a slight depression. The apparatus according to the invention also provides a system to collect and discharge condensate. In a preferred embodiment, water that condenses in the upper part of the apparatus is collected through a funnel 112 that conveys the condensate into tube 113. The water thus collected can be discharged into sewage or surface water having a degree of purity in line with the ARPA parameters established by law.

**.** The level of the tank is kept constant by means of a tank level adjustment system. A simple and effective way to adjust the tank level is through a weir 501 placed on the wall at the top of the tank. In order to minimise possible disturbances in the composition of the liquid leaving the tank, the level regulation system shall preferably be placed in a distal position relative to inlet 104 of wastewater. Weir 501 is connected to a collection tube 202 that brings the collected liquid to a collection bin or to a storage and disposal system via outlet pipe 502. The collected liquid shall preferably include at least 90 % by weight of lubricating oil, preferably at least 95 % by weight of lubricating oil.

**.** Concerning the dimensions of the apparatus, the figures report the measures of an apparatus having a useful volume of the central tank 101 of about 0.50 m³, that is the reservoir in operation accommodates about 0.50 m³ of liquid. This dimension is suitable to treat about 10-30 l/h of wastewater. However, it is clear that for higher or lower flow rates it is possible to adapt the dimensions of the apparatus accordingly. In general, the tank of the apparatus may preferably have a volume ranging from 0.20 m³ to 2.00 m³. For optimal operation, the volume of the apparatus should correspond to a residence time in the apparatus from about 5 hours to about 50 hours, preferably from about 8 hours to about 25 hours. A shorter residence times prevents a good stratification of water and thus leads to an oily residue containing greater amounts of water, while a higher residence time results in unnecessarily high investment costs.

## Claims

1. An apparatus (100) for the concentration of wastewater containing oily substances, the apparatus comprising:
a. a shell and tube heat exchanger (102), positioned vertically along the internal perimeter of the apparatus;
b. a tank (101) positioned inside the shell and tube heat exchanger (102), wherein wastewater is stocked;
c. an entrance pipe (103), for the entrance of wastewater, which pipe feeds a mechanic system (104), which allows wastewater to percolate along an internal wall of tank (101);
d. a pump (105) and a second pump (201);
e. a pipe (118) that connects the bottom of tank (101) to suction of a pump (105);
f. a pipe (114) connecting the mandate of pump (105) to a distribution plate (106) of heat exchanger (102);
g. a pipe (116) connecting a bottom (115) of the heat exchanger (102) where concentrated water percolating into the pipes (107) of the shell and tube heat exchanger collects, with suction of a second pump (201);
h. a pipe (109) connecting a mandate of pump (201) with the bulk of tank (102);
i. a ventilator, preferably a centrifuge ventilator;
j. an exit pipe (110) connected to the ventilator, that draws vapors into exit (110) from a head of the heat exchanger (102);
k. a system for collecting and discharging the condensed vapors which condenses in the dome of the apparatus, whose outside surface is configured to be in contact with external air, at ambient temperature;
l. a system that maintains a level in the tank, which system is connected to an outlet pipe (502) by a collection pipe (202).

2. The apparatus according to claim 1, wherein pipes (107) of the shell and tube heat exchanger (102) protrude from plate (106) of a height comprised between 1 cm and 5 cm.

3. The apparatus according to claims 1-2, wherein each pipe (107) presents a groove (108), preferably V-shaped, on the upper edge, which slot allow the liquid to enter gradually and in a distributed way in the pipe (107).

4. The apparatus according to claims 1-3, wherein pipe (114) presents at the top a cup system (106) which system distributes the liquid homogeneously on the distribution plate (106).

5. The apparatus according to claims 1-4, wherein the system that maintains a level in the tank is a weir (501).

6. The apparatus according to claim 5, wherein the weir (501) is placed in distal position with respect to entrance pipe (103).

7. The apparatus according to claims 1-6 wherein heating water enters the heat exchanger from the bottom and exits from the top.

8. The apparatus according to claims 1-7, wherein the length of pipe (109) is such that the liquid collected at the bottom of the heat exchanger (102) enters tank (101) at a height which varies from ½ to ¾ of the height of the liquid in tank (101).

9. The apparatus according to claims 1-8, wherein the total volume of tank (101) varies in the range of from 0.20 m³ to 2.00 m³.

10. A process for recovering oil from wastewater of at least one water cooled apparatus, which process comprises:
a. collecting wastewater from the at least one water cooled apparatus;
b. sending the collected wastewater to the apparatus of claims 1-9;
c. recovering concentrated oil containing no more than 10% water at outlet pipe (502).

11. A system comprising:
a. at least one water cooled apparatus;
b. an apparatus (100) for the concentration of wastewater according to claims 1-10; wherein an exit of cooling water of the at least one water cooled apparatus is connected with the entrance of heating water in the heat exchanger of the apparatus for the concentration of wastewater.

12. The system of claim 11, wherein water is configured to exit from the at least one water cooled apparatus at a temperature comprised between 60 and 80°C.

## Patentansprüche

1. Vorrichtung (100) für die Konzentration von Abwasser, das ölhaltige Substanzen enthält,
die Vorrichtung, umfassend:
a. einen Rohrbündelwärmetauscher (102), der vertikal entlang des Innenumfangs der Vorrichtung positioniert ist;
b. einen Behälter (101), der innerhalb des Rohrbündelwärmetauschers (102) positioniert ist, in dem Abwasser gelagert ist;
c. eine Eingangsrohrleitung (103) für den Eintritt von Abwasser, wobei die Rohrleitung ein mechanisches System (104) speist, das es ermöglicht, dass Abwasser entlang einer Innenwand des Behälters (101) sickert;
d. eine Pumpe (105) und eine zweite Pumpe (201);
e. eine Rohrleitung (118), die den Boden des Behälters (101) mit dem Ansaugen von Pumpe (105) verbindet;
f. eine Rohrleitung (114), die die Anordnung der Pumpe (105) mit einer Verteilerplatte (106) des Wärmetauschers (102) verbindet;
g. eine Rohrleitung (116), die einen Boden (115) des Wärmetauschers (102) verbindet, wo konzentriertes Wasser, das in die Rohrleitungen (107) des Rohrbündelwärmetauschers sickert, mit dem Ansaugen von zweiter Pumpe (201) gesammelt wird;
h. eine Rohrleitung (109), die eine Förderung von Pumpe (201) mit dem Volumen von Behälter (102) verbindet;
i. einen Lüfter, vorzugsweise einen Zentrifugallüfter;
j. eine mit dem Lüfter verbundene Ausgangsrohrleitung (110), die Dämpfe von einem Kopf des Wärmetauschers (102) in den Ausgang (110) saugt;
k. ein System zum Sammeln und Abführen der kondensierten Dämpfe, die in der Kuppel der Vorrichtung, deren Außenfläche dazu konfiguriert ist, mit Außenluft in Kontakt zu sein, bei Umgebungstemperatur kondensieren;
l. ein System, das einen Füllstand in dem Behälter aufrechterhält, wobei das System durch eine Sammelrohrleitung (202) mit einer Auslassrohrleitung (502) verbunden ist.

2. Vorrichtung nach Anspruch 1, wobei Rohrleitungen (107) des Rohrbündelwärmetauschers (102) mit einer Höhe zwischen 1 cm und 5 cm von der Platte (106) hervorstehen.

3. Vorrichtung nach den Ansprüchen 1-2, wobei jede Rohrleitung (107) an dem oberen Rand eine vorzugsweise V-förmige Nut (108) aufweist, die einen allmählichen und verteilten Eintritt der Flüssigkeit in die Rohrleitung (107) ermöglicht.

4. Vorrichtung nach den Ansprüchen 1-3, wobei die Rohrleitung (114) an der Oberseite ein Bechersystem (106) aufweist, wobei dieses System die Flüssigkeit homogen auf der Verteilerplatte (106) verteilt.

5. Vorrichtung nach den Ansprüchen 1-4, wobei das System, das einen Füllstand in dem Behälter aufrechterhält, ein Wehr (501) ist.

6. Verfahren nach Anspruch 5, wobei das Wehr (501) in distaler Position in Bezug auf die Eingangsrohrleitung (103) platziert ist.

7. Vorrichtung nach den Ansprüchen 1-6, wobei Heizwasser von unten in den Wärmetauscher eintritt und an der Oberseite austritt.

8. Vorrichtung nach den Ansprüchen 1-7, wobei die Länge der Rohrleitung (109) derart ist, dass die am Boden des Wärmetauschers (102) gesammelte Flüssigkeit mit einer Höhe in den Behälter (101) eintritt, die von ½ bis ¾ der Höhe der Flüssigkeit in dem Behälter (101) variiert.

9. Vorrichtung nach den Ansprüchen 1-8, wobei das Gesamtvolumen des Behälters (101) in dem Bereich von 0,20 m³ bis 2,00 m³ variiert.

10. Verfahren zum Rückgewinnen von Öl aus Abwasser von mindestens einer wassergekühlten Vorrichtung, wobei das Verfahren Folgendes umfasst:
a. Sammeln von Abwasser von der mindestens einen wassergekühlten Vorrichtung;
b. Senden des gesammelten Abwassers an die Vorrichtung nach den Ansprüchen 1-9;
c. Rückgewinnen von konzentriertem Öl, das nicht mehr als 10 % Wasser enthält, an der Auslassrohrleitung (502).

11. System, umfassend:
a. mindestens eine wassergekühlte Vorrichtung;
b. eine Vorrichtung (100) zum Konzentrieren von Abwasser nach den Ansprüchen 1-10; wobei ein Ausgang von Kühlwasser der mindestens eine wassergekühlte Vorrichtung mit dem Eingang von Heizwasser in dem Wärmetauscher der Vorrichtung zum Konzentrieren von Abwasser verbunden ist.

12. System nach Anspruch 11, wobei Wasser dazu konfiguriert ist, um bei einer Temperatur zwischen 60 und 80 °C aus der mindestens einen wassergekühlten Vorrichtung auszutreten.

## Revendications

1. Appareil (100) de concentration des eaux usées contenant des substances huileuses,
l'appareil comprenant :
a. un échangeur de chaleur à calandre et à tube (102), positionné verticalement le long du périmètre interne de l'appareil ;
b. un réservoir (101) positionné à l'intérieur de l'échangeur de chaleur à calandre et à tube (102), dans lequel les eaux usées sont stockées ;
c. un tuyau d'entrée (103), pour l'entrée des eaux usées, tuyau qui alimente un système mécanique (104), qui permet aux eaux usées de percoler le long d'une paroi interne du réservoir (101) ;
d. une pompe (105) et une seconde pompe (201) ;
e. un tuyau (118) qui relie le fond du réservoir (101) à l'aspiration de la pompe (105) ;
f. un tuyau (114) reliant le mandat de pompe (105) à une plaque de distribution (106) de l'échangeur de chaleur (102) ;
g. un tuyau (116) reliant un fond (115) de l'échangeur de chaleur (102) où l'eau concentrée percolant dans les tuyaux (107) de l'échangeur de chaleur à calandre et à tube s'accumule, à l'aspiration de la seconde pompe (201) ;
h. un tuyau (109) reliant un mandat de pompe (201) au corps du réservoir (102) ;
i. un ventilateur, de préférence un ventilateur centrifuge ;
j. un tuyau de sortie (110) relié au ventilateur, qui aspire les vapeurs dans la sortie (110) à partir d'une tête de l'échangeur de chaleur (102) ;
k. un système de collecte et d'évacuation des vapeurs condensées qui se condense dans le dôme de l'appareil, dont la surface extérieure est configurée pour être en contact avec l'air extérieur, à température ambiante ;
l. un système qui maintient un niveau dans le réservoir, système qui est relié à un tuyau de sortie (502) par un tuyau de collecte (202).

2. Appareil selon la revendication 1, dans lequel les tuyaux (107) de l'échangeur de chaleur à calandre et à tube (102) font saillie de la plaque (106) d'une hauteur comprise entre 1 cm et 5 cm.

3. Appareil selon les revendications 1 à 2, dans lequel chaque tuyau (107) présente une rainure (108), de préférence en forme de V, sur le bord supérieur, dont la fente permet au liquide d'entrer progressivement et de manière répartie dans le tuyau (107) .

4. Appareil selon les revendications 1 à 3, dans lequel le tuyau (114) présente au sommet un système de coupelle (106), système qui distribue le liquide de manière homogène sur la plaque de distribution (106).

5. Appareil selon les revendications 1 à 4, dans lequel le système qui maintient un niveau dans le réservoir est un déversoir (501).

6. Appareil selon la revendication 5, dans lequel le déversoir (501) est placé en position distale par rapport au tuyau d'entrée (103).

7. Appareil selon les revendications 1 à 6, dans lequel l'eau de chauffage entre dans l'échangeur de chaleur par le fond et sort par le haut.

8. Appareil selon les revendications 1 à 7, dans lequel la longueur du tuyau (109) est telle que le liquide collecté au fond de l'échangeur de chaleur (102) pénètre dans le réservoir (101) à une hauteur qui varie de ½ à ¾ de la hauteur du liquide dans le réservoir (101).

9. Appareil selon les revendications 1 à 8, dans lequel le volume total du réservoir (101) varie dans la plage allant de 0,20 m³ à 2, 00 m³.

10. Procédé de récupération d'huile à partir des eaux usées d'au moins un appareil refroidi par eau, le procédé comprenant :
a. collecter des eaux usées provenant de l'au moins un appareil refroidi par eau ;
b. envoyer les eaux usées collectées à l'appareil selon les revendications 1 à 9 ;
c. récupérer l'huile concentrée ne contenant pas plus de 10 % d'eau au niveau du tuyau de sortie (502).

11. Système comprenant :
a. au moins un appareil refroidi par eau ;
b. un appareil (100) de concentration des eaux usées selon les revendications 1 à 10 ; dans lequel une sortie d'eau de refroidissement de l'au moins un appareil refroidi par eau est reliée à l'entrée d'eau de chauffage dans l'échangeur de chaleur de l'appareil de concentration des eaux usées.

12. Système selon la revendication 11, dans lequel l'eau est configurée pour sortir de l'au moins un appareil refroidi par eau à une température comprise entre 60 et 80 °C.
